# FASCICULE DE BREVET EUROPEEN

(11) **EP 4 173 326 B1**
(45) Date de publication et mention de la délivrance du brevet: **12.02.2025**
(21) Numéro de dépôt: 21748904.6
(22) Date de dépôt: 24.06.2021
(51) Int. Cl.: H04W 8/18, H04W 48/18, H04W 88/02, H04W 12/03, H04W 12/06

(54) **PROCEDE ET DISPOSITIF DE SELECTION D'UN RESEAU ETENDU A BASSE CONSOMMATION**
VERFAHREN UND VORRICHTUNG ZUR AUSWAHL EINES WEITBEREICHSNETZWERKS MIT NIEDRIGER LEISTUNG
METHOD AND DEVICE FOR SELECTING A LOW-POWER WIDE-AREA NETWORK

(30) Priorité: 26.06.2020 FR 2006717
(43) Date de publication de la demande: 03.05.2023
(73) Titulaire: Orange, 92130 Issy-les-Moulineaux (FR)
(72) Inventeur: CHIVOT, Laurent, 92326 Châtillon Cedex (FR); GAILLET, Thierry, 92326 Châtillon Cedex (FR)
(74) Mandataire: Cabinet Beau de Loménie
(86) Numéro de dépôt international: PCT/FR2021/051166
(87) Numéro de publication internationale: WO 2021/260332

(56) Documents cités:
- EP-A1- 3 490 279
- WO-A1-2018/183789
- US-A1- 2015 119 103
- TORROGLOSA-GARCIA ELENA M ET AL: "Enabling Roaming Across Heterogeneous IoT Wireless Networks: LoRaWAN MEETS 5G", IEEE ACCESS, IEEE, USA, vol. 8, 28 May 2020 (2020-05-28), pages 103164 - 103180, XP011792248, DOI: 10.1109/ACCESS.2020.2998416
- LORA ALLIANCE(TM): "LoRaWan 1.1 Specifications", 11 October 2017 (2017-10-11), pages 1 - 101, XP055785380, Retrieved from the Internet <URL:https://lora-alliance.org/wp-content/uploads/2020/11/lorawantm_specification_-v1.1.pdf> [retrieved on 20210312]

## Description

### Domaine de l'invention

L'invention se rapporte au domaine général des télécommunications, et plus particulièrement à celui de la sélection d'un réseau étendu à basse consommation par un dispositif.

### Technique antérieure

A titre d'exemple, des réseaux étendus à basse consommation sont les réseaux fonctionnant selon le protocole LoRaWan (pour « Long Range Wide-area network »).

Le document WO 2018/183789 A1 décrit un réseau LPWAN qui peut utiliser plusieurs serveurs de réseau, et distribuer des dispositifs IoT (par exemple, des nœuds d'extrémité LoRa) sur des serveurs de réseau de sorte à équilibrer les charges sur ces serveurs de réseau.

Le document US 2015/119103 A1 concerne des procédés, des systèmes et des dispositifs pour hiérarchiser les technologies de communication pour allouer des ressources dans un dispositif mobile qui utilise une configuration à deux abonnements qui peuvent être associés à des communications actives simultanément.

Le document TORROGLOSA-GARCIA ELENA et al : « Enabling Roaming Across Heterogenoeus IoT Wireless Networks : LoRaWAN MEETS 5G », 28 mai 2020 propose un nouveau mécanisme d'itinérance pour le protocole LoRaWAN (Low Range Wide Area Network) qui s'appuie sur le réseau 5G de confiance pour effectuer l'authentification et la gestion des clés des dispositifs IoT.

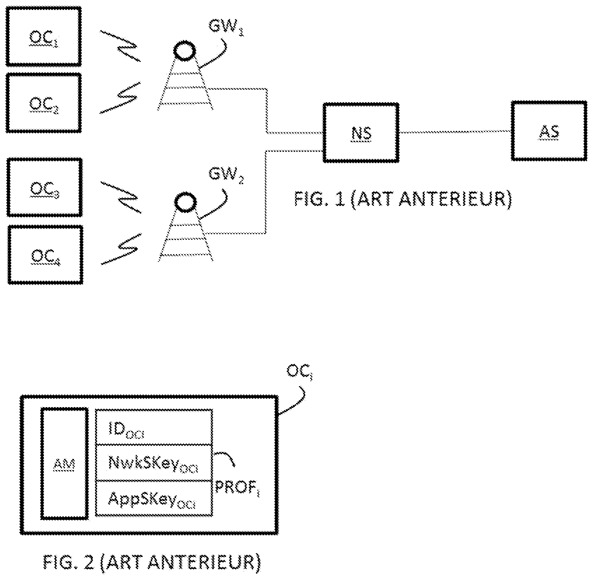

La figure 1 illustre quatre objets connectés OC₁ à OC₄, deux passerelles GW₁, GW₂, un serveur réseau NS et un serveur d'application AS dans un réseau fonctionnant selon le protocole LoRaWan (ou réseau LoRaWan) conforme à l'état de la technique.

Les objets connectés OC₁ à OC₄ sont par exemple des équipements sans-fils basse consommation. Ils communiquent avec les passerelles GW₁, GW₂ dans la bande de fréquences libres ISM en utilisant la modulation LoRa (marque déposée) développée par la société Semtech Corporation (marque déposée).

Les passerelles GW₁, GW₂ ne sont pas adressées spécifiquement par les objets connectés OC₁ à OC₄ : toutes les passerelles présentes dans la zone de couverture reçoivent les messages et les traitent. Elles jouent donc le rôle de passerelle entre une modulation LoRa, et une communication IP.

Les informations transmises au serveur réseau NS par les objets connectés OCᵢ sont authentifiées grâce à une clé AES 128 bits (en anglais « Advanced Encryption Standard ») appelée Network Session Key : NwkSKey_{OCi}. Cette clé NwkSKey_{OCi} sert à l'authentification entre un objet connecté OCᵢ et un serveur réseau NS. Plus précisément, et de façon connue, afin de réaliser cette authentification entre l'objet connecté OCᵢ et le serveur réseau NS, un champ MIC (pour « Message Integrity Control ») est ajouté à la trame. Il est calculé en fonction des données transmises et de la clé NwkSKey_{OCi}.

A réception, le même calcul est effectué par le serveur réseau NS. Si les clés NwkSKey_{OCi} sont identiques dans l'objet connecté OCᵢ et dans le serveur réseau NS alors les deux valeurs MIC calculées doivent correspondre.

En plus de l'authentification, le serveur réseau NS gère d'autres fonctions de sécurité. Il élimine aussi les paquets en doublon, lorsque plusieurs passerelles ont reçu le même message d'un objet connecté.

Le serveur d'application AS analyse les données reçues des objets connectés OCᵢ. Par exemple, si les objets connectés sont des capteurs de température, le serveur d'application AS peut analyser et traiter les mesures de températures reçues de ces objets connectés via le réseau LoRaWAN. Le serveur d'application AS mémorise les identifiants ID_{OCi} des objets connectés sous sa gestion. Les messages transmis au serveur d'application AS par les objets connectés OCᵢ sont chiffrés grâce à une clé AES 128 bits appelée Application Session Key : AppSKey_{OCi}.

La figure 2 représente un objet connecté OCᵢ conforme à l'état actuel de la technique. Il mémorise notamment un profil, ou plus généralement une structure de données, PROFᵢ comportant son identifiant unique ID_{OCi}, sa clef d'authentification NwkSKey_{OCi} auprès du serveur réseau NS et sa clé de chiffrement AppSKey_{OCi}. Il comporte également une application métier AM qui utilise ces informations pour envoyer des données au serveur d'application AS via le réseau correspondant à la clef d'authentification NwkSKey_{OCi}.

Les réseaux LoRaWAN sont maintenant répandus et des centaines de millions d'objets à travers le monde sont connectés via différents réseaux LoRaWAN, dont plus d'une centaine sont gérés par des opérateurs et bien davantage par des gestionnaires privés, notamment dans les pays où la couverture offerte par les opérateurs est insuffisante.

Aujourd'hui, très peu d'opérateurs LoRaWAN sont interconnectés par des accords d'itinérance (en anglais « roaming ») et de nombreux gestionnaires privés souhaitent conserver des solutions propriétaires.

Les initiatives de la LoRa Alliance pour faciliter l'interconnexion entre les réseaux LoRaWan, notamment par les principes d'itinérance passive et active définis par les spécifications v.1.1 n'ont à ce jour pas permis d'éviter un double morcellement des réseaux LoRaWAN, entre réseaux privés et réseaux opérés par des opérateurs publics d'une part, et entre les réseaux publics d'opérateurs n'ayant pas conclu d'accord d'itinérance d'autre part.

L'invention vise à une solution à ce problème. Elle s'applique en particulier aux réseaux étendus à basse consommation, connus en terminologie anglo-saxonne comme réseaux de type LPWA (pour « Low Power Wide Area »), ne présentant pas de fonctionnalités natives d'itinérance (« roaming » en terminologie anglo-saxonne). Ainsi, elle s'applique en particulier aux réseaux LoRaWAN mais plus généralement à tout réseau étendu à basse consommation.

### Exposé de l'invention

Plus précisément, l'invention concerne un procédé de sélection d'un réseau étendu à basse consommation parmi une pluralité de réseaux étendus à basse consommation , ce procédé étant mis en œuvre par un dispositif de type terminal ou objet connecté déclaré auprès de ces réseaux et comportant une table pouvant mémoriser au moins deux profils, chaque profil correspondant à un de ces réseaux. Ce procédé comporte :
- une étape de sélection d'un profil de la table ; et
- une étape de connexion au réseau correspondant à ce profil en utilisant ledit profil.

Corrélativement, l'invention concerne un dispositif de type terminal ou objet connecté comportant :
- une table pouvant mémoriser au moins deux profils, chacun de ces profils correspondant à un réseau étendu à basse consommation parmi une pluralité de réseaux étendus à basse consommation auprès desquels le dispositif est déclaré. Ce dispositif comporte:
- un module de sélection d'un profil de la table ; et
- un module configuré pour connecter le dispositif au réseau correspondant à ce profil en utilisant ledit profil.

La déclaration préalable du dispositif auprès d'un réseau étendu à basse consommation consiste essentiellement à communiquer les éléments nécessaires à ce réseau, pour que le dispositif puisse se connecter au réseau en utilisant son profil.

Dans un mode particulier de réalisation, chacun desdits profils comporte au moins une donnée permettant au dispositif de se connecter au réseau correspondant à ce profil et le dispositif se connecte à ce réseau en utilisant cette donnée.

Dans un mode particulier de réalisation, l'invention est mise en œuvre dans des réseaux LoraWAN. L'invention peut plus généralement être mise en œuvre dans tout réseau étendu à faible consommation énergétique (LPWAN, en anglais pour « Low Power Wide Area Network »). L'invention trouve une application particulière mais non limitative dans le contexte de l'Internet des Objets (IoT, en anglais Internet of Things). Dans un mode particulier de réalisation, le dispositif est intégré dans un objet connecté, par exemple un dispositif de mesure, une montre, ...

Ainsi, le procédé de sélection peut être mis en œuvre par un objet connecté. Selon un autre exemple, le procédé peut être mise en ou par un dispositif de type terminal (« end-device » en terminologie anglo-saxonne) au sens du protocole LoRaWan.

De façon remarquable, le procédé de sélection selon l'invention peut être est mis exclusivement en œuvre par les dispositifs se connectant au réseau étendu à basse consommation, autrement dit par les objets connectés, sans aucun impact sur les autres équipements du réseau, en particulier, dans le cas d'un réseau LoRaWAN, sur le serveur réseau au sens de la figure 1.

En ce sens, le procédé de sélection selon l'invention peut être qualifié d'autonome.

L'invention offre ainsi un mécanisme permettant à un objet connecté de sélectionner un réseau, sans impact sur le réseau. Elle offre ainsi une solution au problème d'interconnexion des réseaux, que ceux-ci soient gérés par des opérateurs publics ou par des gestionnaires privés. Elle ne requiert pas d'accord d'itinérance entre les opérateurs de réseau.

L'invention peut être utilisée dans un modèle statique dans lequel le dispositif n'est pas nécessairement susceptible de se déplacer, mais susceptible d'être connecté à différents réseaux étendus à basse consommation. Par exemple, l'invention trouve une application dans laquelle le dispositif peut être utilisé dans différents pays, la table de profils comportant un profil pour chacun de ces pays.

Dans un mode particulier de mise en œuvre, le dispositif sélectionne les profils dans la table de façon aléatoire ou cyclique. En reprenant l'exemple dans lequel le dispositif peut être utilisé dans différents pays, le dispositif peut sélectionner les profils de la table les uns après les autres jusqu'à ce que le profil correspondant au pays d'utilisation soit sélectionné.

Dans un mode particulier de réalisation, le procédé de sélection comporte une étape pour détecter une éventuelle perte d'une capacité du dispositif à communiquer avec ledit réseau et, le cas échéant :
- une étape de sélection d'un profil de la table ; et
- une étape de connexion au réseau correspondant à ce profil, en utilisant ce profil.

On considère par exemple que le dispositif perd une capacité à communiquer avec ledit réseau s'il sort de zone couverte par le réseau ou s'il cesse d'être authentifié ou autorisé à communiquer avec le réseau.

En ce sens, le procédé de sélection selon l'invention peut être qualifié de « dynamique » puisqu'il permet avantageusement au dispositif de se connecter à un nouveau réseau en réaction à la détection d'une perte de capacité à communiquer avec le réseau auquel le dispositif est connecté à un instant donné.

L'invention trouve ainsi une application en mobilité et permet de garantir une continuité de service lorsque le dispositif quitte la couverture d'un premier réseau et entre sous la couverture d'un deuxième réseau. Le dispositif selon l'invention peut par conséquent être mobile, par exemple porté par un objet connecté mobile ou par une personne.

Dans un mode particulier de réalisation, la table est une table de profils priorisés, les profils étant associés à des priorités respectives mémorisées dans la table et la sélection d'un profil étant effectuée en fonction de sa priorité.

L'invention permet ainsi de privilégier le premier réseau sélectionné selon différents critères ou de basculer dynamiquement une connexion établie sur un premier réseau vers un deuxième réseau plus pertinent au sens de ces critères. Les critères de sélection d'un réseau peuvent être de toute nature.

Dans un mode particulier de réalisation, le procédé de sélection comporte une étape de modification d'au moins une des priorités.

Le dispositif peut ainsi privilégier ou au contraire défavoriser certains réseaux dynamiquement, par exemple en fonction de la fiabilité de ces réseaux.

Dans un mode particulier de réalisation, ladite table peut être mise à jour pour ajouter un profil à la table et/ou supprimer un profil de la table et/ou modifier la priorité d'au moins un des profils de la table.

En effet, si la table de profils d'un dispositif doit pouvoir comporter plusieurs profils, cette table peut ne comporter aucun profil ou un seul profil. Le premier profil peut par exemple être chargé par un terminal incorporant le dispositif par tout moyen, par exemple via un câble USB, par lecture d'une étiquette RFID ... Les autres profils peuvent être téléchargés dans la table par ce mêmes moyens ou par un mécanisme OTA (en anglais Over The Air).

Dans un mode particulier de réalisation, le procédé de sélection comporte une étape pour détecter une éventuelle modification de la table et, le cas échéant :
- une étape de sélection d'un profil de ladite table ; et
- une étape de connexion au réseau correspondant audit profil en utilisant ce profil.

Ce mode de réalisation permet en particulier au dispositif de se connecter ou de basculer vers un nouveau réseau dès qu'un profil associé à ce réseau est téléchargé dans la table de profils.

Dans un mode particulier de réalisation, la donnée comprise dans le profil et permettant au dispositif de se connecter à un réseau étendu à basse consommation est une clef d'authentification permettant au dispositif de s'authentifier auprès d'un serveur de ce réseau.

Dans un mode particulier de réalisation, les profils comportent en outre une clé de chiffrement associée à un serveur d'application.

Le procédé de sélection selon l'invention est une solution purement logicielle. Il peut être mis en œuvre par un programme d'ordinateur. Par conséquent, l'invention vise également un programme d'ordinateur sur un support d'enregistrement, ce programme étant susceptible d'être mis en œuvre dans un dispositif ou plus généralement dans un ordinateur. Ce programme comporte des instructions permettant la mise en œuvre d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution de l'un des procédés tels que décrits précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 déjà décrite représente un réseau LoRaWAN de l'état actuel de la technique ;
[Fig. 2] la figure 2 déjà décrite représente un objet connecté conforme à l'état actuel de la technique ;
[Fig. 3] la figure 3 représente un exemple d'environnement dans lequel l'invention peut être mise en œuvre;
[Fig. 4] la figure 4 représente l'architecture matérielle d'un dispositif conforme à un mode particulier de réalisation ;
[Fig. 5] la figure 5 représente un exemple de profil pouvant être utilisé dans un dispositif conforme à un mode particulier de réalisation ;
[Fig. 6] la figure 6 représente sous forme d'ordinogramme un procédé de sélection conforme à un mode particulier de réalisation ; et
[Fig. 7] la figure 7 représente l'architecture fonctionnelle d'un dispositif conforme à un mode particulier de réalisation.

### Description détaillée de modes de réalisation particuliers

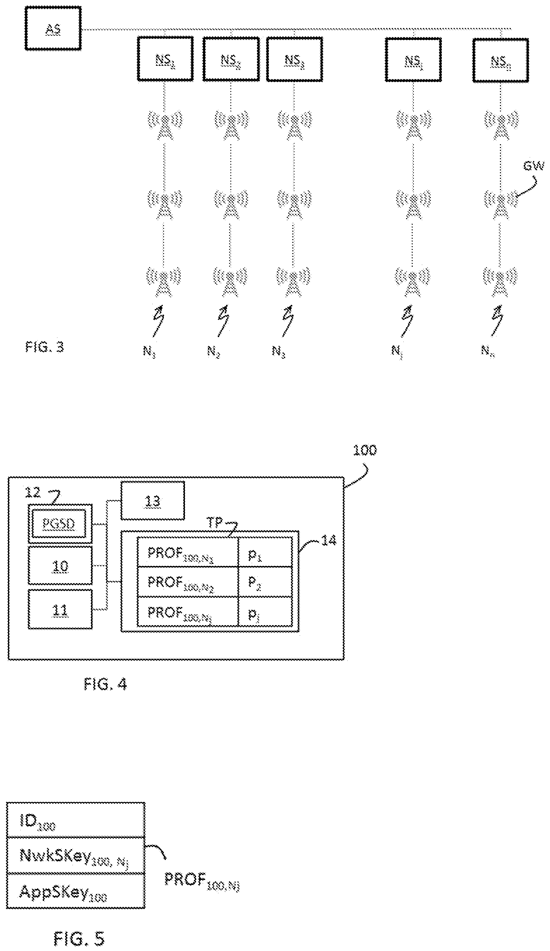

La figure 3 représente un exemple d'environnement dans lequel l'invention peut être mise en œuvre. Dans cet exemple, on considère n réseaux étendus à basse consommation, par exemple de type LoRaWAN N₁ à Nₙ. Chaque réseau Nⱼ comporte une ou plusieurs passerelles GW et un serveur réseau NSⱼ. Un serveur d'application AS est relié aux réseaux N₁ à Nₙ par un réseau étendu, par exemple le réseau Internet.

Lorsque le réseau étendu à basse consommation est de type LoRaWan, le procédé de sélection peut être mis en œuvre par un dispositif de type terminal (end-device en terminologie anglo-saxonne) au sens du protocole LoRaWan, c'est-à-dire fonctionnant selon le protocole LoRaWan. En outre, le dispositif se connecte au réseau Nj en se connectant à un serveur de réseau NS au sens de la norme LoRaWan.

L'homme du métier des réseaux de communication sans fil fait la distinction entre les réseaux en mode connecté et les réseaux en mode non connecté. Certains réseaux étendus à base consommation fonctionnent en mode non connecté.

Les réseaux en mode connecté (ou fonctionnant en mode connecté) sont les réseaux dans lesquels il existe un canal de communication établi en permanence entre le réseau et les dispositifs terminaux communiquant sur ces réseaux. A titre d'exemples, les réseaux GSM, Wi-Fi (marque déposée) et Bluetooth (marque déposée) sont des réseaux en mode connecté. Comme précisé dans le document https://fr.wikipedia.org/wiki/Mode_connecté, le mode connecté vise plus précisément « l'établissement d'une session de communication entre deux parties qui veulent échanger des données, cette session comportant e un début, une fin et une validation (vérification des erreurs), classiquement un identifiant et un mot de passe. Elle correspond à la couche n°5 dite « session » du modèle OSI, entre les couches « présentation » et « transport » ».

Au contraire, dans un réseau en mode non connecté, il n'existe pas de canal de communication établi en permanence entre les dispositifs terminaux et le réseau. Il n'existe pas non plus de mécanisme d'appairage entre les dispositifs terminaux et le réseau.

La figure 4 représente l'architecture matérielle d'un dispositif 100 conforme à l'invention. Dans l'exemple de réalisation décrit ici, ce dispositif 100 a l'architecture matérielle d'un ordinateur. Il comporte notamment un processeur 10, une mémoire vive de type RAM 11, une mémoire morte de type ROM 12, une mémoire non volatile réinscriptible de type Flash 14 et des moyens de communication 13.

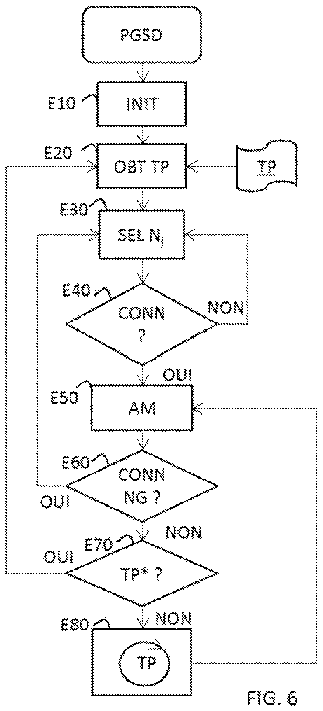

La mémoire morte 12 constitue un support conforme à un mode particulier de réalisation de l'invention. Cette mémoire comporte un programme d'ordinateur PGSD conforme à un mode particulier de réalisation de l'invention, qui lorsqu'il est exécuté par le processeur 10, met en œuvre le d'un procédé de sélection conforme à l'invention et décrit ultérieurement en référence à la figure 6.

Dans le mode de réalisation décrit ici, la mémoire 14 du dispositif 100 comporte une table TP de profils priorisés. Dans l'exemple de la figure 4, la table TP comporte trois profils PROF₁₀₀, _{N1}, PROF₁₀₀, _{N2} et PROF₁₀₀, _{Nj} de priorités respectives p₁, p₂, et pⱼ permettant au dispositif 100 de s'authentifier respectivement auprès des réseaux N1, N2 et Nj.

A titre d'exemple, la figure 5 représente le profil PROF_{100, Nj} : il comporte l'identifiant unique ID₁₀₀ du dispositif 100, sa clef d'authentification NwkSKey_{100, Nj} auprès du serveur NSⱼ du réseau Nj et sa clé de chiffrement AppSKey₁₀₀ associée au serveur d'application AS.

La figure 6 représente sous forme d'ordinogramme les principales étapes d'un procédé de sélection conforme à un mode particulier de réalisation. Dans le mode de réalisation décrit ici, ce procédé est mis en œuvre par le dispositif 100 de la figure 4.

On suppose dans cet exemple que le dispositif 100 a préalablement été déclaré auprès des serveurs réseau NS₁, NS₂ et NDⱼ, le dispositif 100 étant susceptible de se trouver à un moment donné sous la couverture d'au moins une passerelle des réseaux N₁, N₂ ou Nⱼ.

La déclaration auprès du serveur réseau NSⱼ peut être effectuée via un portail ou via une API (en anglais « Application Programming Interface ») d'une plateforme de l'opérateur ou du gestionnaire du réseau Nⱼ.

Au cours d'une étape E10, les profils PROF₁₀₀, _{N1}, PROF₁₀₀, _{N2} et PROF_{100, Nj} du dispositif 100 pour les réseaux respectifs N₁, N₂ ou Nⱼ sont enregistrés dans la table de profils priorisés TP. Chacun des profils PROF₁₀₀, _{Nj} est associé initialement à une priorité p.

On suppose dans cet exemple qu'initialement, un profil PROF₁₀₀, _{Nj} est associé à la priorité pⱼ, la priorité p₁ étant la plus prioritaire.

Les profils de la table TP et la priorité de ces profils sont susceptibles de varier dans le temps, en particulier de façon dynamique : de nouveaux profils peuvent être ajoutés à la table de profils TP, des profils peuvent être supprimés de la table des profils TP et les priorités d'un ou plusieurs profils présents dans la table de profils TP peuvent être modifiées.

Par exemple, si le dispositif 100 détecte qu'un critère de connectivité d'un réseau Nₖ diminue, il modifie la priorité pₖ de ce réseau pour que celui-ci devienne moins prioritaire. Ce critère de qualité de connectivité, ou de qualité globale de connectivité peut par exemple tenir compte de la fréquence d'utilisation du réseau, de taux de non joignabilité, de taux d'erreurs, etc.

Par exemple la table de profils TP peut être mise à jour à travers le réseau selon un mécanisme OTA (en anglais « Over The Air ») par une trame reçue du serveur réseau NS. Elle peut aussi être mise à jour depuis un terminal (par exemple un téléphone intelligent, en anglais « smartphone ») si le dispositif 100 peut établir une communication (USB, BLE, NFC ...) avec ce terminal. Elle peut également être mise à jour par lecture d'une étiquette RFID si le dispositif 100 est configuré pour pouvoir lire de telles étiquettes.

Dans le mode de réalisation décrit ici, le procédé exécute alors une boucle infinie comportant les étapes E20 à E80 décrites ci-après.

Au cours d'une étape E20, le dispositif 100 obtient la liste des profils enregistrés dans la table des profils TP.

Dans un mode de réalisation, au cours d'une étape E30, le dispositif 100 sélectionne le profil de priorité la plus élevée puis (étape E40) essaie de se connecter au réseau correspondant à ce profil. Par conséquent, dans l'exemple particulier décrit ici, le dispositif 100 essaie de se connecter au réseau N₁, puis s'il échoue au réseau N₂, puis s'il échoue au réseau Nⱼ. Pour se connecter au réseau N₁ par exemple, le dispositif 100 utilise la clé d'authentification NwkSKey_{100, N1} auprès du serveur NS₁, comprise dans le profil PROF₁₀₀, _{N1}. Lorsque le réseau étendu à basse consommation est un réseau de type LoRaWAN, la tentative de connexion peut être effectuée par l'envoi d'une commande de type JOIN_ACCEPT.

Dans un autre mode de réalisation, le dispositif sélectionne le profil de manière aléatoire.

Dans le mode de réalisation décrit ici, le résultat du test E40 est positif si le dispositif 100 parvient à s'authentifier auprès d'un réseau et négatif dans le cas contraire. On suppose dans cet exemple que le dispositif 100 parvient effectivement à s'authentifier auprès du serveur réseau NS₁.

Au cours d'une étape E50, le dispositif 100 exécute son application métier AM. Cette application métier embarquée dans le dispositif 100 correspond à la fonction première du dispositif 100, par exemple acquérir une mesure (température, fréquence vibratoire) avec un capteur du dispositif 100 et à envoyer cette mesure au serveur d'application AS. L'application métier utilise à cet effet la clé d'authentification NwkSKey_{100, N1} auprès du serveur NS₁ et la clé de chiffrement AppSKey₁₀₀ associée au serveur d'application AS. Ces clés sont donc des variables de l'application métier AM.

Au cours d'une étape E60, le dispositif 100 vérifie s'il est toujours apte à communiquer avec ledit réseau, par exemple s'il est toujours dans une zone couverte par le réseau et authentifié auprès du réseau (en l'occurrence avec le réseau N₁ dans cet exemple). Lorsque le réseau étendu à basse consommation est un réseau de type LoRaWAN, cette vérification peut consister à envoyer une demande d'état LINK_CHECK_REQUEST.

Elle peut aussi consister à vérifier si des messages de confirmation ont été reçus en réponse à des messages envoyés par le dispositif 100 au serveur NS ou au serveur d'application AS.

Si le dispositif considère qu'il n'est plus en mesure de communiquer avec le réseau (en l'occurrence N1), le résultat du test E60 est positif et le dispositif 100 exécute à nouveau l'étape E30 pour sélectionner le profil de priorité la plus élevée (en l'occurrence le profil PROF₁₀₀, _{N2}) et essayer (étape E40) de se connecter au réseau N₂ correspondant à ce profil.

Si au cours du test E60 le dispositif 100 détermine que la connexion en cours est toujours active, le résultat du test E60 est négatif et le dispositif 100 exécute une étape E70 pour déterminer si sa table des profils TP a été mise à jour (ajout d'un nouveau profil, suppression d'un profil, modification d'une priorité).

Si tel est le cas le résultat du test E70 est positif et le procédé exécute à nouveau l'étape E20 d'obtention de sa table de profils, afin de sélectionner le profil de priorité la plus élevée (étape E30) pour tenter de se connecter (étape E40) au réseau associé à ce profil.

Si la table de profils TP n'a pas été modifiée, le résultat du test E70 est négatif. Dans le mode de réalisation décrit ici, le dispositif 100 détermine au cours d'une étape E80 si la priorité des profils de la table TP doit être modifiée. Si c'est le cas, le dispositif 100 modifie les priorités au cours de cette même étape.

Les priorités peuvent par exemple être modifiées automatiquement par le dispositif 100 pour privilégier les réseaux les plus fiables ou les plus fréquemment connectés, par exemple selon un mécanisme de pondération.

Par exemple, dans un mode de réalisation, le dispositif 100 mémorise un historique de ses connexions précédentes avec les différents réseaux et modifie les priorités des profils associés à ces réseaux en en fonction de cet historique.

Cet historique peut par exemple enregistrer les critères de connectivité mentionnés précédemment (fréquence d'utilisation du réseau, taux de non joignabilité, taux d'erreurs, etc).

Par exemple si le dispositif 100 détermine qu'un réseau Nₖ est statistiquement plus disponible que les autres, ou qu'un critère de connectivité augmente pour ce réseau, le dispositif 100 peut choisir de relever la priorité du profil associé à ce réseau.

La priorité associée à un réseau peut aussi être modifiée par le dispositif 100 en fonction de paramètres obtenus ou mesurés par le dispositif, par exemple représentatifs de sa localisation, de l'heure courante, de son niveau de batterie ...

Puis le dispositif 100 exécute à nouveau l'application métier (par retour à l'étape E50), par exemple pour acquérir une nouvelle mesure et l'envoyer cette mesure au serveur d'application AS.

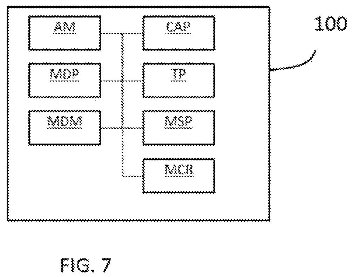

La figure 7 représente l'architecture fonctionnelle d'un dispositif 100 conforme à l'invention. Dans l'exemple de réalisation décrit ici, le dispositif 100 comporte :
- un capteur CAP ;
- une table TP de profils telle que mentionnée ci-dessus ;
- un module MSP configuré pour sélectionner un profil de ladite table TP ; et
- un module MCR configuré pour connecter le dispositif 100 à un réseau Nⱼ en utilisant les données comprises dans un profil de la table TP associé à ce réseau;
- une application métier AM configurée pour envoyer des mesures acquises par le capteur CAP à un serveur d'application AS, ces mesures étant chiffrées par une clé de chiffrement AppSKey₁₀₀ comprise dans le profil ;
- un module MDP configuré pour détecter une perte de connexion du dispositif 100 ; et
- un module MDM configuré pour détecter une modification de la table de profils.

Les modules MSP, MCR, MDP et MDM peuvent être implémentés selon l'architecture matérielle décrite en référence à la figure 4.

## Revendications

1. Procédé de sélection d'un réseau étendu à basse consommation (Nⱼ) parmi une pluralité de réseaux étendus à basse consommation (N₁, Nₙ), ledit procédé étant mis en œuvre par un dispositif (100) de type terminal ou objet connecté déclaré auprès des réseaux (N₁, Nₙ) et comportant une table (TP) pouvant mémoriser au moins deux profils (PROF₁₀₀, _{N1}, PROF_{100, Nj}), chacun desdits profils (PROF₁₀₀, _{Nj}) correspondant à un (Nⱼ) desdits réseaux (N₁, Nₙ), ledit procédé comportant :
- une étape (E30) de sélection d'un profil (PROF₁₀₀, _{Nj}) de ladite table (TP) ; et
- une étape (E40) de connexion au réseau (Nⱼ) correspondant audit profil (PROF₁₀₀, _{Nj}) en utilisant ledit profil (PROF₁₀₀, _{Nj}).

2. Procédé de sélection selon la revendication 1 dans lequel ladite table (TP) est une table de profils priorisés, lesdits profils (PROF₁₀₀, _{N1}, PROF₁₀₀, _{Nj}) étant associés à des priorités respectives (pⱼ) mémorisées dans ladite table (TP), la sélection (E30) d'un profil étant effectuée en fonction de sa priorité.

3. Procédé de sélection selon la revendication 1 ou 2 dans lequel ladite table (TP) peut être mise à jour dynamiquement pour ajouter un profil à ladite table et/ou supprimer un profil de ladite table et/ou modifier la priorité d'au moins un des profils de ladite table.

4. Procédé de sélection selon l'une quelconque des revendications 1 à 3 comportant une étape (E60) pour détecter une éventuelle perte d'une capacité du dispositif (100) à communiquer avec ledit réseau (Nⱼ) et, le cas échéant :
- une étape (E30) de sélection d'un profil (PROF_{100, Nj}) de ladite table (TP) ; et
- une étape (E40) de connexion au réseau (Nⱼ) correspondant audit profil (PROF_{100, Nj}) en utilisant ledit profil (PROF₁₀₀, _{Nj}).

5. Procédé de sélection selon l'une quelconque des revendications 1 à 4 comportant une étape (E70) pour détecter une éventuelle modification de ladite table (TP) et, le cas échéant :
- une étape (E30) de sélection d'un profil (PROF₁₀₀, _{Nj}) de ladite table (TP) ; et
- une étape (E40) de connexion au réseau (Nⱼ) correspondant audit profil (PROF₁₀₀, _{Nj}) en utilisant ledit profil (PROF₁₀₀, _{Nj}).

6. Procédé de sélection selon l'une quelconque des revendications 2 à 5 comportant une étape (E100) de modification d'au moins une desdites priorités (pⱼ).

7. Procédé de sélection selon l'une quelconque des revendications 1 à 6 dans lequel chacun desdits profils (PROF₁₀₀, _{Nj}) comporte une donnée (NwkSKey_{100, Nj}) permettant au dispositif (100) de se connecter au réseau correspondant audit profil.

8. Procédé de sélection selon la revendication 7, dans lequel ladite donnée est une clef d'authentification permettant audit dispositif (100) de s'authentifier auprès d'un serveur (NSⱼ) d'un (Nⱼ) desdits réseaux étendu à basse consommation (N₁, Nₙ).

9. Procédé de sélection selon l'une quelconque des revendications 1 à 7 dans lequel lesdits profils (PROF_{100, Nj}) comportent une clé de chiffrement (AppSKey₁₀₀) associée à un serveur d'application (AS).

10. Procédé de sélection selon l'une quelconque des revendications 1 à 9 dans lequel ledit réseau étendu à base consommation sélectionné (N₁, Nₙ) est un réseau fonctionnant selon le protocole LoraWAN.

11. Dispositif (100) de type terminal ou objet connecté comportant :
- une table (TP) pouvant mémoriser au moins deux profils (PROF₁₀₀, _{N1}, PROF₁₀₀, _{Nj}), chacun desdits profils (PROF_{100, Nj}) correspondant à un réseau étendu à basse consommation (Nⱼ) parmi une pluralité de réseaux étendus à basse consommation (N₁, Nₙ) auprès desquels ledit dispositif (100) est déclaré, ledit dispositif comportant :
- un module (MSP) de sélection d'un profil (PROF₁₀₀, _{Nj}) de ladite table (TP) ; et
- un module (MCR) configuré pour connecter ledit dispositif (100) au réseau (Nⱼ) correspondant audit profil (PROF_{100, Nj}) en utilisant ledit profil (PROF_{100, Nj}).

12. Programme d'ordinateur (PGSD) comportant des instructions configurées pour mettre en œuvre les étapes d'un procédé de sélection selon l'une quelconque des revendications 1 à 10 lorsqu'elles sont exécutées par un dispositif (100) de type terminal ou objet connecté.

## Patentansprüche

1. Verfahren zur Auswahl eines Niedrigenergie-Weitverkehrsnetzes (Nⱼ) unter einer Vielzahl von Niedrigenergie-Weitverkehrsnetzen (N₁, Nₙ), wobei das Verfahren von einer Vorrichtung (100) vom Typ Endgerät oder vernetztes Objekt durchgeführt wird, die bei Netzen (N₁, Nₙ) angemeldet ist und eine Tabelle (TP) aufweist, die mindestens zwei Profile (PROF_{100,N1}, PROF_{100,Nj}) speichern kann, wobei jedes der Profile (PROF_{100,Nj}) einem (Nⱼ) der Netze (N₁, Nₙ) entspricht, wobei das Verfahren aufweist:
- einen Schritt (E30) der Auswahl eines Profils (PROF_{100,Nj}) aus der Tabelle (TP) ; und
- einen Schritt (E40) der Verbindung mit dem dem Profil (PROF_{100,Nj}) entsprechenden Netz (Nⱼ) unter Verwendung des Profils (PROF_{100,Nj}).

2. Auswahlverfahren nach Anspruch 1, wobei die Tabelle (TP) eine Tabelle priorisierter Profile ist, wobei die Profile (PROF_{100,N1}, PROF_{100,Nj}) in der Tabelle (TP) gespeicherten Prioritäten (pⱼ) zugeordnet sind, wobei die Auswahl (E30) eines Profils abhängig von seiner Priorität ausgeführt wird.

3. Auswahlverfahren nach Anspruch 1 oder 2, wobei die Tabelle (TP) dynamisch aktualisiert werden kann, um ein Profil zur Tabelle hinzuzufügen und/oder ein Profil aus der Tabelle zu löschen und/oder die Priorität mindestens eines der Profile der Tabelle zu ändern.

4. Auswahlverfahren nach einem der Ansprüche 1 bis 3, das einen Schritt (E60) aufweist, um einen möglichen Verlust einer Fähigkeit der Vorrichtung (100), mit dem Netz (Nⱼ) zu kommunizieren, zu erkennen, und ggf.:
- einen Schritt (E30) der Auswahl eines Profils (PROF_{100,Nj}) aus der Tabelle (TP); und
- einen Schritt (E40) der Verbindung mit dem dem Profil (PROF_{100,Nj}) entsprechenden Netz (Nⱼ) unter Verwendung des Profils (PROF_{100,Nj}).

5. Auswahlverfahren nach einem der Ansprüche 1 bis 4, das einen Schritt (E70) aufweist, um eine mögliche Änderung der Tabelle (TP) zu erkennen, und ggf.:
- einen Schritt (E30) der Auswahl eines Profils (PROF_{100,Nj}) aus der Tabelle (TP); und
- einen Schritt (E40) der Verbindung mit dem dem Profil (PROF_{100,Nj}) entsprechenden Netz (Nⱼ) unter Verwendung des Profils (PROF_{100,Nj}).

6. Auswahlverfahren nach einem der Ansprüche 2 bis 5, das einen Schritt (E100) der Änderung mindestens einer der Prioritäten (pⱼ) aufweist.

7. Auswahlverfahren nach einem der Ansprüche 1 bis 6, wobei jedes der Profile (PROF_{100,Nj}) einen Datenwert (NwkSKey_{100,Nj}) aufweist, der es der Vorrichtung (100) ermöglicht, sich mit dem dem Profil entsprechenden Netz zu verbinden.

8. Auswahlverfahren nach Anspruch 7, wobei der Datenwert ein Authentifizierungsschlüssel ist, der es der Vorrichtung (100) ermöglicht, sich bei einem Server (NSⱼ) eines (Nⱼ) der Niedrigenergie-Weitverkehrsnetze (N₁, Nₙ) zu authentifizieren.

9. Auswahlverfahren nach einem der Ansprüche 1 bis 7, wobei die Profile (PROF_{100,Nj}) einen Verschlüsselungsschlüssel (AppSKey₁₀₀) aufweisen, der einem Anwendungsserver (AS) zugeordnet ist.

10. Auswahlverfahren nach einem der Ansprüche 1 bis 9, wobei das ausgewählte Niedrigenergie-Weitverkehrsnetz (N₁,Nₙ) ein gemäß dem Protokoll LoraWAN arbeitendes Netz ist.

11. Vorrichtung (100) der Art Endgerät oder vernetztes Objekt, die aufweist:
- eine Tabelle (TP), die mindestens zwei Profile (PROF_{100,N1}, PROF_{100,Nn}) speichern kann, wobei jedes der Profile (PROF_{100,Nj}) einem Niedrigenergie-Weitverkehrsnetz (Nⱼ) unter einer Vielzahl von Niedrigenergie-Weitverkehrsnetzen (N₁, Nₙ) entspricht, bei denen die Vorrichtung (100) angemeldet ist, wobei die Vorrichtung aufweist:
- ein Modul (MSP) zur Auswahl eines Profils (PROF_{100,Nj}) aus der Tabelle (TP); und
- ein Modul (MCR), das konfiguriert ist, die Vorrichtung (100) mit dem dem Profil (PROF_{100,Nj}) entsprechenden Netz (Nⱼ) unter Verwendung des Profils (PROF_{100,Nj}) zu verbinden.

12. Computerprogramm (PGSD), das Anweisungen aufweist, die konfiguriert sind, die Schritte eines Auswahlverfahrens nach einem der Ansprüche 1 bis 10 durchzuführen, wenn sie von einer Vorrichtung (100) der Art Endgerät oder vernetztes Objekt ausgeführt werden.

## Claims

1. Selection method, for selecting a low-power wide-area network (Nⱼ) from a plurality of low-power wide-area networks (N₁, Nₙ), said method being implemented by an end device or connected object (100) declared to the networks (N₁, Nₙ) and comprising a table (TP) capable of storing at least two profiles (PROF₁₀₀, _{N1}, PROF₁₀₀, _{Nj}), each of said profiles (PROF₁₀₀, _{Nj}) corresponding to one (Nⱼ) of said networks (N₁, Nₙ), said method comprising:
- a step (E30) of selecting a profile (PROF₁₀₀, _{Nj}) from said table (TP); and
- a step (E40) of connecting to the network (Nⱼ) corresponding to said profile (PROF₁₀₀, _{Nj}) using said profile (PROF_{100, Nj}).

2. Selection method according to Claim 1, wherein said table (TP) is a table of prioritized profiles, said profiles (PROF_{100, N1}, PROF_{100, Nj}) being associated with respective priorities (pⱼ) stored in said table (TP), a profile being selected (E30) depending on its priority.

3. Selection method according to Claim 1 or Claim 2, wherein said table (TP) is able to be updated dynamically, to add a profile to said table and/or remove a profile from said table and/or modify the priority of at least one of the profiles of said table.

4. Selection method according to any of Claims 1 to 3, comprising a step (E60) of detecting a potential loss of an ability of the device (100) to communicate with said network (Nⱼ) and, where appropriate:
- a step (E30) of selecting a profile (PROF_{100, Nj}) from said table (TP); and
- a step (E40) of connecting to the network (Nⱼ) corresponding to said profile (PROF₁₀₀, _{Nj}) using said profile (PROF_{100, Nj}).

5. Selection method according to any of Claims 1 to 4, comprising a step (E70) of detecting a potential modification of said table (TP) and, where appropriate:
- a step (E30) of selecting a profile (PROF₁₀₀, _{Nj}) from said table (TP); and
- a step (E40) of connecting to the network (Nⱼ) corresponding to said profile (PROF₁₀₀, _{Nj}) using said profile (PROF_{100, Nj}).

6. Selection method according to any of Claims 2 to 5, comprising a step (E100) of modifying at least one of said priorities (pⱼ).

7. Selection method according to any of Claims 1 to 6, wherein each of said profiles (PROF₁₀₀, _{Nj}) comprises a datum (NwkSKey_{100, Nj}) allowing the device (100) to connect to the network corresponding to said profile.

8. Selection method according to Claim 7, wherein said datum is an authentication key allowing said device (100) to authenticate itself to a server (NSⱼ) of one (Nⱼ) of said low-power wide-area networks (N₁, Nₙ).

9. Selection method according to any of Claims 1 to 7, wherein said profiles (PROF₁₀₀, _{Nj}) contain an encryption key (AppSKey₁₀₀) associated with an application server (AS).

10. Selection method according to any of Claims 1 to 9, wherein said selected low-power wide-area network (N₁, Nₙ) is a network operating according to the LoRaWAN protocol.

11. End device or connected object (100) comprising:
- a table (TP) capable of storing at least two profiles (PROF_{100, N1}, PROF_{100, Nj}), each of said profiles (PROF_{100, Nj}) corresponding to one low-power wide-area network (Nⱼ) among a plurality of low-power wide-area networks (N₁, Nₙ) to which said device (100) has declared itself, said device comprising:
- a module (MSP) for selecting a profile (PROF₁₀₀, _{Nj}) from said table (TP); and
- a module (MCR) configured to connect said device (100) to the network (Nⱼ) corresponding to said profile (PROF_{100, Nj}) using said profile (PROF_{100, Nj}).

12. Computer program (PGSD) comprising instructions configured to implement the steps of a selection method according to any of Claims 1 to 10 when they are executed by an end device or connected object (100).
